# EUROPEAN PATENT SPECIFICATION

(11) **EP 2 401 832 B1**
(45) Date of publication and mention of the grant of the patent: **29.03.2017**
(21) Application number: 10709315.5
(22) Date of filing: 23.02.2010
(51) Int. Cl.: H04L 5/00

(54) **FLEXIBLE DATA AND CONTROL MULTIPLEXING**
FLEXIBLES DATEN- UND STEUERUNGSMULTIPLEXING
MULTIPLEXAGE DE DONNÉES ET DE COMMANDE FLEXIBLE

(30) Priority: 09.02.2010 US 702551; 24.02.2009 US 155064 P
(43) Date of publication of application: 04.01.2012
(73) Proprietor: QUALCOMM Incorporated, San Diego, CA 92121 (US)
(72) Inventor: CHEN, Wanshi, San Diego CA 92121 (US); MONTOJO, Juan, San Diego CA 92121 (US); LUO, Xiliang, San Diego CA 92121 (US); ZHANG, Xiaoxia, San Diego CA 92121 (US)
(74) Representative: Dunlop, Hugh Christopher
(86) International application number: PCT/US2010/025088
(87) International publication number: WO 2010/099121

(56) References cited:
- QUALCOMM EUROPE: "CM Analysis of Concurrent PUSCH and PUCCH UL transmission for LTE-A" 3GPP DRAFT; R1-090363, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318267 [retrieved on 2009-01-08]
- QUALCOMM EUROPE: "Support of Concurrent Transmission of PUCCH and PUSCH in LTE-A Uplink" 3GPP DRAFT; R1-090362, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318266 [retrieved on 2009-01-08]
- NORTEL: "Clustered DFT-S-OFDM Transmission from Multiple Transmit Antennas" 3GPP DRAFT; R1-090752(NORTEL-UL NON-CONTIGUOUS TRANSLTE-A), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090205, 5 February 2009 (2009-02-05), XP050318615 [retrieved on 2009-02-05]
- QUALCOMM EUROPE: "Multicarrier Control for LTE-Advanced" 3GPP DRAFT; R1-090862, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318712 [retrieved on 2009-02-03]

## Description

### TECHNICAL FIELD

Certain aspects of the present disclosure generally relate to wireless communications and, more particularly, to systems and methods for control and data transmission.

### BACKGROUND

Wireless communication systems are widely deployed to provide various types of communication; for instance, voice and/or data can be provided via such wireless communication systems. A typical wireless communication system, or network, can provide multiple users access to one or more shared resources (e.g., bandwidth, transmit power, etc.). For instance, a system can use a variety of multiple access techniques such as Frequency Division Multiplexing (FDM), Time Division Multiplexing (TDM), Code Division Multiplexing (CDM), Orthogonal Frequency Division Multiplexing (OFDM), and others.

Generally, wireless multiple-access communication systems can simultaneously support communication for multiple mobile devices. Each mobile device can communicate with one or more base stations via transmissions on forward and reverse links. The forward link (or downlink) refers to the communication link from base stations to mobile devices, and the reverse link (or uplink) refers to the communication link from mobile devices to base stations. Optimization of network coverage and service quality are constant goals for wireless network operators.

3GPP draft submissions R1-090363 (Qualcomm Europe: "CM Analysis of Concurrent PUSCH and PUCCH UL transmission for LTE- A") and R1-090362 (Qualcomm Europe: "Support of Concurrent Transmission of PUCCH and PUSCH in LTE-A Uplink") set out a proposal for employing concurrent transmission of PUCCH and PUSCH in LTE-A uplink and a Cubic Metric analysis of concurrent transmission of PUCCH and PUSCH in LTE-A (uplink) respectively. 3GPP draft submissions R1-090752 (NORTEL: "Clustered DFT-S-OFDM Transmission from Multiple Transmit Antennas") describes a proposal for implementing clustered DFT-S-OFDM transmission by user equipment with multiple transmit antennas.

### SUMMARY

Aspects of the invention are set out in the independent claims. Certain examples of the present disclosure provide a method for wireless communications. The method generally includes receiving a signal, determining a multiplexing mode based on the received signal, identifying a first set of carriers to be used for transmission of data based on the received signal, wherein the first set of carriers comprises one or more carriers, identifying a second set of carriers to be used for transmission of control signals based on the received signal, wherein the second set of carriers comprises one or more carriers, and transmitting one or more data signals and one or more control signals on the identified first and second sets of carriers based on the multiplexing mode.

Certain examples of the present disclosure provide a method for wireless communications. The method generally includes determining a multiplexing mode and number of resource elements used for data or control transmission by a user equipment (UE), transmitting a signal to the UE indicating at least the multiplexing mode, and receiving one or more control signals and one or more data signals from the UE utilizing the multiplexing mode.

Certain examples of the present disclosure provide an apparatus for wireless communications. The apparatus generally includes logic for receiving a signal, logic for determining a multiplexing mode based on the received signal, logic for identifying a first set of carriers to be used for transmission of data based on the received signal, wherein the first set of carriers comprises one or more carriers, logic for identifying a second set of carriers to be used for transmission of control signals based on the received signal, wherein the second set of carriers comprises one or more carriers, and logic for transmitting one or more data signals and one or more control signals on the identified first and second sets of carriers based on the multiplexing mode.

Certain examples of the present disclosure provide an apparatus for wireless communications. The apparatus generally includes logic for determining a multiplexing mode and number of resource elements used for data or control transmission by a user equipment (UE), logic for transmitting a signal to the UE indicating at least the multiplexing mode, and logic for receiving one or more control signals and one or more data signals from the UE utilizing the multiplexing mode.

Certain examples of the present disclosure provide an apparatus for wireless communications. The apparatus generally includes means for receiving a signal, means for determining a multiplexing mode based on the received signal, means for identifying a first set of carriers to be used for transmission of data based on the received signal, wherein the first set of carriers comprises one or more carriers, means for identifying a second set of carriers to be used for transmission of control signals based on the received signal, wherein the second set of carriers comprises one or more carriers, and means for transmitting one or more data signals and one or more control signals on the identified first and second sets of carriers based on the multiplexing mode.

Certain examples of the present disclosure provide an apparatus for wireless communications. The apparatus generally includes means for determining a multiplexing mode and number of resource elements used for data or control transmission by a user equipment (UE), means for transmitting a signal to the UE indicating at least the multiplexing mode, and means for receiving one or more control signals and one or more data signals from the UE utilizing the multiplexing mode.

Certain examples provide a computer-program product for wireless communications, comprising a computer-readable medium having instructions stored thereon, the instructions being executable by one or more processors. The instructions generally include instructions for receiving a signal, instructions for determining a multiplexing mode based on the received signal, instructions for identifying a first set of carriers to be used for transmission of data based on the received signal, wherein the first set of carriers comprises one or more carriers, instructions for identifying a second set of carriers to be used for transmission of control signals based on the received signal, wherein the second set of carriers comprises one or more carriers, and instructions for transmitting one or more data signals and one or more control signals on the identified first and second sets of carriers based on the multiplexing mode.

Certain examples provide a computer-program product for wireless communications, comprising a computer-readable medium having instructions stored thereon, the instructions being executable by one or more processors. The instructions generally include instructions for determining a multiplexing mode and number of resource elements used for data or control transmission by a user equipment (UE), instructions for transmitting a signal to the UE indicating at least the multiplexing mode, and instructions for receiving one or more control signals and one or more data signals from the UE utilizing the multiplexing mode. [0013] Certain aspects of the present disclosure provide an apparatus for wireless communications. The apparatus generally includes at least one processor configured to receive a signal, determine a multiplexing mode based on the received signal, identify a first set of carriers to be used for transmission of data based on the received signal, wherein the first set of carriers comprises one or more carriers, identify a second set of carriers to be used for transmission of control signals based on the received signal, wherein the second set of carriers comprises one or more carriers, and transmit one or more data signals and one or more control signals on the identified first and second sets of carriers based on the multiplexing mode.

Certain examples of the present disclosure provide an apparatus for wireless communications. The apparatus generally includes at least one processor configured to determine a multiplexing mode and number of resource elements used for data or control transmission by a user equipment (UE), transmit a signal to the UE indicating at least the multiplexing mode, and receive one or more control signals and one or more data signals from the UE utilizing the multiplexing mode.

### BRIEF DESCRIPTION OF THE DRAWINGS

So that the manner in which the above -recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a multiple access wireless communication system, in accordance with certain aspects of the present disclosure.
FIG. 2 illustrates a block diagram of a communication system, in accordance with certain aspects of the present disclosure.
FIG. 3 illustrates an example wireless communication system, in accordance with certain aspects of the present disclosure.
FIG. 4 illustrates example component carriers used for data and control transmission, in accordance with certain aspects of the present disclosure.
FIG. 5 illustrates example operations that may be performed by a user terminal for flexible data and control multiplexing, in accordance with certain aspects of the present disclosure.
FIG. 5A illustrates example components capable of performing the operations illustrated in FIG. 5.
FIG. 6 illustrates example operations that may be performed by an access point for flexible data and control multiplexing, in accordance with certain aspects of the present disclosure.
FIG. 6A illustrates example components capable of performing the operations illustrated in FIG. 6.

### DETAILED DESCRIPTION

Various aspects are now described with reference to the drawings. In the following description, for purposes of explanation, numerous specific details are set forth in order to provide a thorough understanding of one or more aspects. It may be evident; however, that such aspect(s) may be practiced without these specific details.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM).

An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art. For clarity, certain aspects of the techniques are described below for LTE, and LTE terminology is used in much of the description below.

Single carrier frequency division multiple access (SC-FDMA), which utilizes single carrier modulation and frequency domain equalization is a technique. SC-FDMA has similar performance and essentially the same overall complexity as those of OFDMA system. SC-FDMA signal has lower peak-to-average power ratio (PAPR) because of its inherent single carrier structure. SC-FDMA has drawn great attention, especially in the uplink communications where lower PAPR greatly benefits the mobile terminal in terms of transmit power efficiency. It is currently a working assumption for uplink multiple access scheme in 3GPP Long Term Evolution (LTE), or Evolved UTRA.

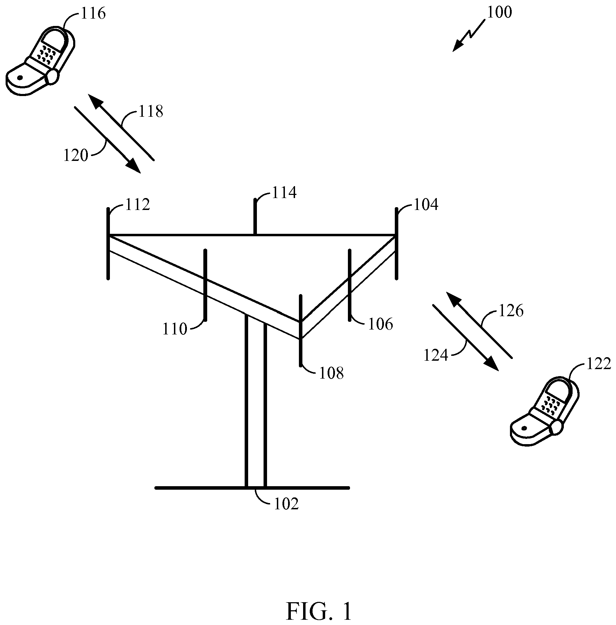

Referring to Fig. 1, a multiple access wireless communication system according to one embodiment is illustrated. An access point 100 (AP) includes multiple antenna groups, one including 104 and 106, another including 108 and 110, and an additional including 112 and 114. In Fig. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal 122 is in communication with antennas 106 and 108, where antennas 106 and 108 transmit information to access terminal 122 over forward link 126 and receive information from access terminal 122 over reverse link 124. In an FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access point. In the embodiment, antenna groups each are designed to communicate to access terminals in a sector, of the areas covered by access point 100.

In communication over forward links 120 and 126, the transmitting antennas of access point 100 utilize beamforming in order to improve the signal-to-noise ratio of forward links for the different access terminals 116 and 124. Also, an access point using beamforming to transmit to access terminals scattered randomly through its coverage causes less interference to access terminals in neighboring cells than an access point transmitting through a single antenna to all its access terminals.

An access point may be a fixed station used for communicating with the terminals and may also be referred to as an access point, a Node B, or some other terminology. An access terminal may also be called an access terminal, user equipment (UE), a wireless communication device, terminal, access terminal or some other terminology.

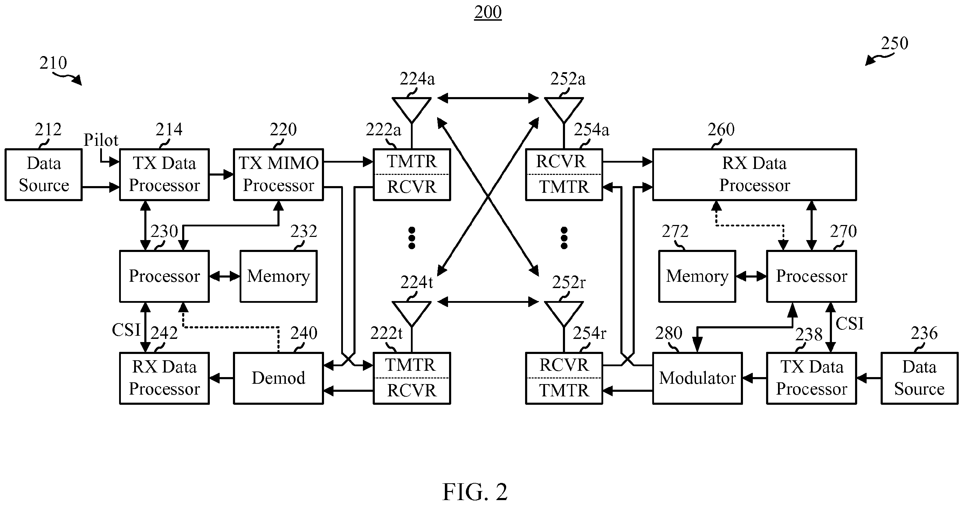

FIG. 2 is a block diagram of an embodiment of a transmitter system 210 (also known as the access point) and a receiver system 250 (also known as access terminal) in a MIMO system 200. At the transmitter system 210, traffic data for a number of data streams is provided from a data source 212 to a transmit (TX) data processor 214.

In an embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides NT modulation symbol streams to NT transmitters (TMTR) 222a through 222t. In certain aspects, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. NT modulated signals from transmitters 222a through 222t are then transmitted from NT antennas 224a through 224t, respectively.

At receiver system 250, the transmitted modulated signals are received by NR antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

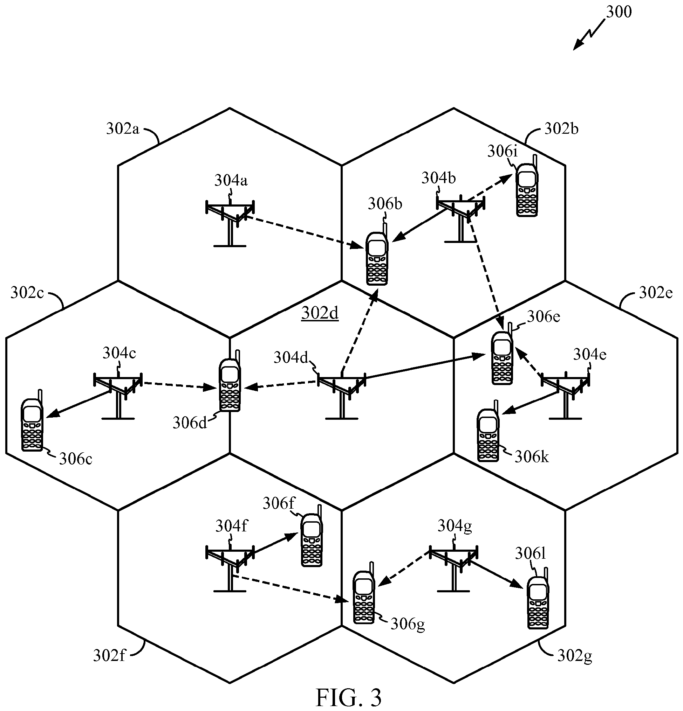

FIG. 3 illustrates an example wireless communication system 300 configured to support a number of users, in which various disclosed embodiments and aspects may be implemented. As shown in FIG. 3, by way of example, system 300 provides communication for multiple cells 302, such as, for example, macro cells 302a-302g, with each cell being serviced by a corresponding access point (AP) 304 (such as APs 304a-304g). Each cell may be further divided into one or more sectors (e.g., to serve one or more frequencies). Various access terminals (ATs) 306, including ATs 306a-306k, also known interchangeably as user equipment (UE) or mobile stations, are dispersed throughout the system. Each UE 306 may communicate with one or more APs 304 on a forward link (FL) and/or a reverse link (RL) at a given moment, depending upon whether the UE is active and whether it is in soft handoff, for example. The wireless communication system 300 may provide service over a large geographic region, for example, macro cells 302a-302g may cover a few blocks in a neighborhood.

### FLEXIBLE DATA AND CONTROL MULTIPLEXING

Certain aspects of the present disclosure propose methods to support both multiplexing and decoupling of control and data transmissions in a wireless communication system.

A plurality of transmission schemes may be utilized in a wireless communication system 300 operating in compliance with a standard, such as the LTE. For example, a transmission scheme may be based on the single-carrier frequency division multiple access (SC-FDMA) for multiple-input multiple-output (MIMO) and non-MIMO configurations. However, the single-carrier property of the uplink waveform may be relaxed in specific cases to support control and data decoupling. The control and data decoupling may refer to simultaneous transmissions in the physical uplink control channel (PUCCH) and the physical uplink shared channel (PUSCH).

The data and control multiplexing as specified in the release 8 of the LTE standard, maintains single-carrier property and preserves the low peak to average power ratio (PAPR), while the control-data decoupling does not require special handling of data and control. Therefore, complexity of both the transmitter and the receiver may significantly be reduced. On the other hand, control resources may be utilized more efficiently when there is simultaneous data transmission in the PUSCH channel.

For certain aspects of the present disclosure, a semi-static approach may be used to notify the users of the multiplexing mode (e.g., decoupling or multiplexing of the data and control signals). Therefore, by upper layer configuration of each UE, either control-data multiplexing (e.g., similar to the control-data multiplexing present in Rel-8 of the LTE standard) or control-data decoupling may be used. For example, low geometry users (e.g., users experiencing a bad channel) may be configured to use Rel-8 control-data multiplexing and high geometry, non-legacy users (e.g., users experiencing a good channel) may be configured to simultaneously transmit control and data (e.g., use control-data decoupling).

One advantage of the static technique is that it may be transparent from the perspective of the UE. In addition, there may not be a need to change the format of the downlink control information (DCI) message. One disadvantage of the above technique may be the fact that change in the mode requires upper-layer reconfiguration, which does not typically happen every transport time interval (TTI). Therefore, the mode change may not happen very quickly. It should be noted that the static technique may still be useful for the applications that do not need a frequent change in the transmission mode.

For certain aspects of the present disclosure, a dynamic approach may be used to notify a UE of the multiplexing mode. In this scheme, one or more bits may be added to the DCI message to indicate to the user whether it is using control-data multiplexing or control-data decoupling.

One advantage of the dynamic technique is that the multiplexing mode of operation may be changed very quickly, even for each TTI. A disadvantage of the dynamic technique may be the fact that it requires a change in the format or interpretation of the DCI message, which may require a change in the current standards.

It should be noted that the set of component carriers used for data and control may be different when data and control multiplexing is used. For example, the set of component carriers used for the PUSCH may be represented by *Cs* and the set of component carriers used for control may be represented as *Cc.* For certain aspects, if *Cc* is a subset of *Cs (Cc ⊆ Cs)*, only one bit indication in a DCI message or high-layer configuration may be used to show the multiplexing mode (either multiplexing or decoupling).

If *Cc* is not a subset of *Cs (Cc ⊄ Cs)*, a few options may arise. For certain aspects, multiplexing may only be applicable for component carriers with both control and data. If a component carrier has data or control only, the data or control may be transmitted using the corresponding carrier.

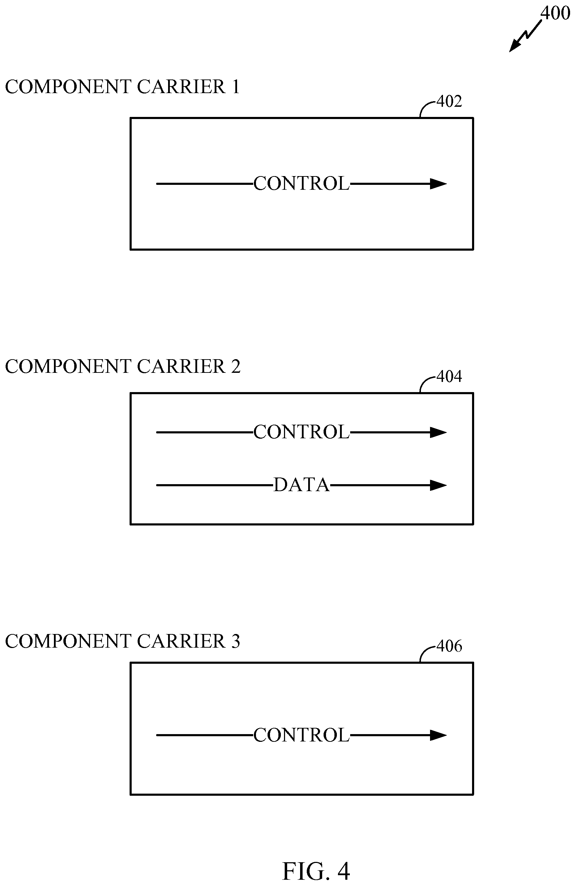

FIG. 4 illustrates an example set of component carriers 400 for transmission of data and control, in accordance with certain aspects of the present disclosure.

As illustrated, control and data in component carrier 2 404 may be either multiplexed or decoupled via signaling, while component carriers 1 402 and 3 406 may always transmit control information.

For certain aspects, if *Cc* is not a subset of *Cs (Cc ⊆ Cs)*, multiplexing may be applicable for some component carriers. In this case, if there is one component carrier with data transmission all the control information may be multiplexed into that component carrier. For instance, in the example in FIG. 4, the control information in component carriers 1, 2 and 3 may all be multiplexed into component carrier 2 404.

If multiplexing is applicable to multiple component carriers, either semi-static signaling or dynamic signaling may be used to indicate how to multiplex. But, this may be too complicated and may not bring any benefits. On the other hand, for simplification, it may be enforced in the standard specifications that *Cc* should always be a subset of *Cs.*

For certain aspects, if data and control information are multiplexed, the number of resource elements (REs) that are used for transmission of control signals may be determined in different ways. For example, configuration of the LTE Rel-8 may be used. Therefore, for each control channel, the number of associated REs may be determined and total number of associated REs may be the summation of REs for each individual control channel.

For certain aspects, the RE configurations may be redefined for control channel as a function of the number of control channels multiplexed into a data channel.

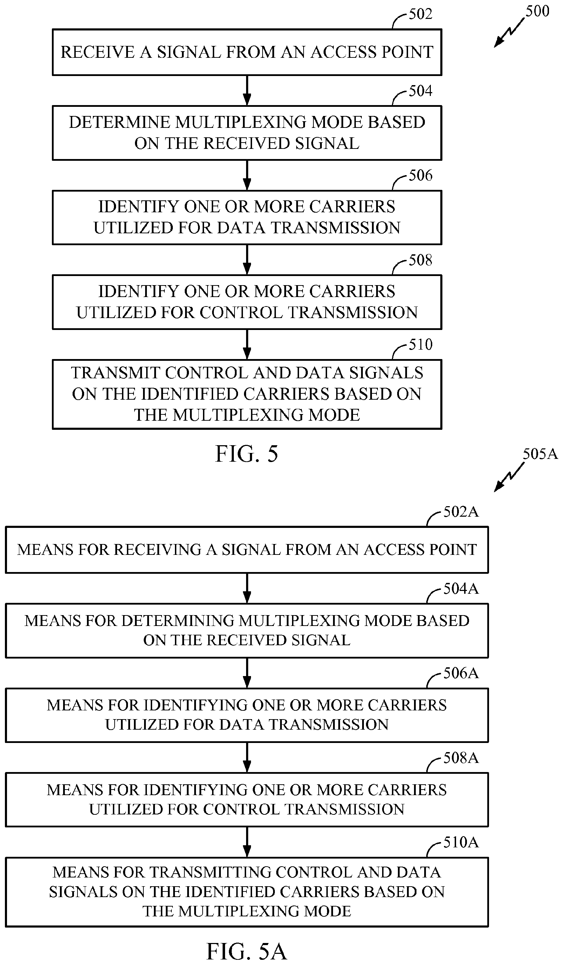

FIG. 5 illustrates example operations that may be performed by a user terminal for flexible data and control multiplexing, in accordance with certain aspects of the present disclosure. At 502, the UE receives a signal, the signal may be received from an access point or from a higher layer such as a Radio Resource Control (RRC) layer or an L3 (layer 3) layer. At 504, the UE determines a multiplexing mode based on the received signal. For example, the multiplexing mode may require simultaneous transmission of data and control signals (data and control decoupling) or multiplexing of data and control in different time slots. For certain aspects, the data and control signals may not be spread with a common Discrete Fourier Transform (DFT).

At 506, the UE identifies a first set of carriers to be used for transmission of data based on the received signal. The first set of carriers may comprise one or more carriers. At 508, the UE identifies a second set of carriers to be used for transmission of control signals based on the received signal. The second set of carriers may comprise one or more carriers. At 510, the UE transmits one or more data signals and one or more control signals on the identified first and second sets of carriers based on the multiplexing mode.

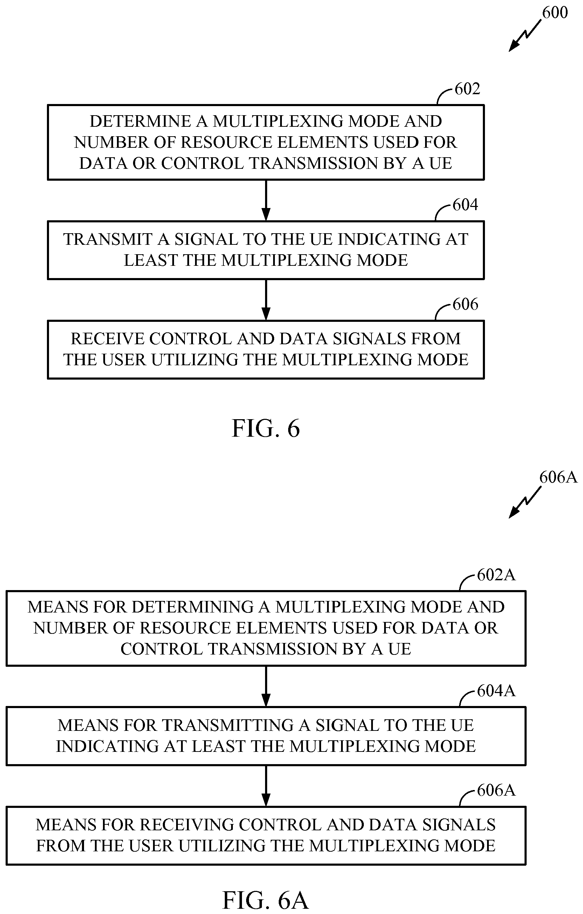

FIG. 6 illustrates example operations that may be performed by an access point for flexible data and control multiplexing, in accordance with certain aspects of the present disclosure. At 602, the access point determines a multiplexing mode and number of resource elements used for control or data transmission by a UE. At 604, the access point transmits a signal to the UE indicating at least the multiplexing mode. At 606, the access point receives control and data signals from the user utilizing the multiplexing mode.

Certain aspects of the present disclosure proposed a plurality of mechanisms to support both control-data multiplexing and control-data decoupling in a wireless communication system.

The various operations of methods described above may be performed by various hardware and/or software component(s) and/or module(s) corresponding to means-plus-function blocks illustrated in the Figures. For example, blocks 502 - 510 illustrated in FIG. 5 correspond to means-plus-function blocks 502A - 510A illustrated in FIG. 5A. In addition, blocks 602 - 606 illustrated in FIG. 6 correspond to means-plus-function blocks 602A - 606A illustrated in FIG. 6A. More generally, where there are methods illustrated in Figures having corresponding counterpart means-plus-function Figures, the operation blocks correspond to means-plus-function blocks with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to embodiments of the present disclosure, other and further embodiments of the disclosure may be devised without departing from the basic scope thereof, and the scope thereof is determined by the claims that follow.

## Claims

1. A method for wireless communications, comprising:
receiving (502) a signal, wherein the signal includes an indication of a multiplexing mode, the multiplexing mode being one of simultaneous transmission of data and control channels or multiplexing data and control signals in different time slots;
determining (504) a multiplexing mode based on the received signal;
identifying (506) a first set of component carriers to be used for transmission of data based on the received signal, wherein the first set of component carriers comprises one or more component carriers;
identifying (508) a second set of component carriers to be used for transmission of control signals based on the received signal, wherein the second set of component carriers comprises one or more component carriers; and
transmitting (510) one or more data signals and one or more control signals on the identified first and second sets of component carriers based on the multiplexing mode.

2. The method of claim 1, further comprising:
identifying one or more resource elements used for transmission of the control signals based on the received signal; and
transmitting the control signals on the identified resource elements.

3. The method of claim 1, wherein the signal comprises a downlink control information, DCI, message.

4. The method of claim 1, wherein the signal is received from a radio resource control, RRC, layer.

5. The method of claim 1, wherein the multiplexing mode comprises simultaneous transmission of the data and the control channels.

6. The method of claim 5, wherein the data and the control channels are not spread with a common Discrete Fourier Transform, DFT, spread.

7. The method of claim 1, wherein the second set of component carriers is a subset of the first set of component carrier.

8. The method of claim 1, wherein the first set of component carriers comprises a single component carrier.

9. The method of claim 8, wherein the control signals are multiplexed into the data signals and transmitted on the component carrier in the first set of component carriers.

10. A method for wireless communications, comprising:
determining (602) a multiplexing mode and number of resource elements used for data or control transmission by a user equipment, UE, the multiplexing mode being one of simultaneous transmission of data and control channels or multiplexing the data and the control signals in different time slots;
transmitting (604) a signal to the UE indicating at least the multiplexing mode; and
receiving (606) one or more control signals and one or more data signals from the UE utilizing the multiplexing mode.

11. The method of claim 10, wherein the signal comprises a downlink control information message.

12. The method of claim 10, wherein the multiplexing mode comprises simultaneous transmission of the data and the control channels.

13. An apparatus for wireless communications, comprising:
means (502A) for receiving a signal including an indication of a multiplexing mode, the multiplexing mode being one of simultaneous transmission of data and control channels or multiplexing data and control channels in different time slots;
means (504A) for determining a multiplexing mode based on the received signal;
means (506A) for identifying a first set of component carriers to be used for transmission of data based on the received signal, wherein the first set of component carriers comprises one or more component carriers;
means (508A) for identifying a second set of component carriers to be used for transmission of control signals based on the received signal, wherein the second set of component carriers comprises one or more component carriers; and
means (510A) for transmitting one or more data signals and one or more control signals on the identified first and second sets of component carriers based on the multiplexing mode.

14. An apparatus for wireless communications, comprising:
means (602A) for determining a multiplexing mode and number of resource elements used for data or control transmission by a user equipment, UE, the multiplexing mode being one of simultaneous transmission of data and control channels or multiplexing the data and the control signals in different time slots;
means (604A) for transmitting a signal to the UE indicating at least the multiplexing mode; and
means (606A) for receiving one or more control signals and one or more data signals from the UE utilizing the multiplexing mode.

15. A computer-program product for wireless communications, comprising a computer readable medium having instructions stored thereon which, when executed by one or more processors, result in performance of all the steps of any one of claims 1 to 12.

## Patentansprüche

1. Ein Verfahren für drahtlose Kommunikationen, aufweisend:
Empfangen (502) eines Signals, wobei das Signal eine Angabe eines Multiplexmodus enthält, wobei der Multiplexmodus ein gleichzeitiges Senden von Daten und Steuerkanälen oder ein Multiplexen von Daten und Steuersignalen in verschiedenen Zeitschlitzen vorsieht,
Bestimmen (504) eines Multiplexmodus basierend auf dem empfangenen Signal,
Identifizieren (506) eines ersten Satzes von Komponententrägern, die für das Senden von Daten zu verwenden sind, basierend auf dem empfangenen Signal, wobei der erste Satz von Komponententrägern einen oder mehrere Komponententräger aufweist,
Identifizieren (508) eines zweiten Satzes von Komponententrägern, die für das Senden von Steuersignalen zu verwenden sind, basierend auf dem empfangenen Signal, wobei der zweite Satz von Komponententrägern einen oder mehrere Komponententräger aufweist, und
Senden (510) eines oder mehrerer Datensignale und eines oder mehrerer Steuersignale auf den identifizierten ersten und zweiten Sätzen von Komponententrägern basierend auf dem Multiplexmodus.

2. Verfahren nach Anspruch 1, das weiterhin aufweist:
Identifizieren eines oder mehrerer Ressourcenelemente, die für das Senden der Steuersignale verwendet werden, basierend auf dem empfangenen Signal, und
Senden der Steuersignale auf den identifizierten Ressourcenelementen.

3. Verfahren nach Anspruch 1, wobei das Signal eine Abwärtsstrecken-Steuerinformation (Downlink Control Information bzw. DCI)-Nachricht enthält.

4. Verfahren nach Anspruch 1, wobei das Signal von einer Funkressourcensteuerung (Radio Resource Control bzw. RRC)-Schicht empfangen wird.

5. Verfahren nach Anspruch 1, wobei der Multiplexmodus das gleichzeitige Senden der Daten und der Steuerkanäle vorsieht.

6. Verfahren nach Anspruch 5, wobei die Daten und die Steuerkanäle nicht mit einer gemeinsamen Diskrete-Fourier-Transformation (DFT)-Spreizung gespreizt werden.

7. Verfahren nach Anspruch 1, wobei der zweite Satz von Komponententrägern ein Teilsatz des ersten Satzes von Komponententrägern ist.

8. Verfahren nach Anspruch 1, wobei der erste Satz von Komponententrägern einen einzelnen Komponententräger aufweist.

9. Verfahren nach Anspruch 8, wobei die Steuersignale in Datensignale gemultiplext und auf dem Komponententräger in dem ersten Satz von Komponententrägern gesendet werden.

10. Ein Verfahren für drahtlose Kommunikationen, aufweisend:
Bestimmen (602) eines Multiplexmodus und einer Anzahl von Ressourcenelementen, die für eine Daten- oder Steuersendung durch ein Benutzergerät (User Equipment bzw. UE) verwendet werden, wobei der Multiplexmodus das gleichzeitige Senden von Daten und Steuerkanälen oder das Multiplexen der Daten und Steuersignale in verschiedenen Zeitschlitzen vorsieht,
Senden (604) eines Signals an das UE, das wenigstens den Multiplexmodus angibt, und
Empfangen (606) eines oder mehrerer Steuersignale und eines oder mehrerer Datensignale von dem UE unter Verwendung des Multiplexmodus.

11. Verfahren nach Anspruch 10, wobei das Signal eine Abwärtsstreckeninformationen-Nachricht enthält.

12. Verfahren nach Anspruch 10, wobei der Multiplexmodus das gleichzeitige Senden der Daten und Steuerkanäle vorsieht.

13. Eine Vorrichtung für drahtlose Kommunikationen, aufweisend:
Mittel (502A) zum Empfangen eines Signals, das eine Angabe eines Multiplexmodus enthält, wobei der Multiplexmodus ein gleichzeitiges Senden von Daten und Steuerkanälen oder ein Multiplexen von Daten und Steuerkanälen in verschiedenen Zeitschlitzen vorsieht,
Mittel (504A) zum Bestimmen eines Multiplexmodus basierend auf dem empfangenen Signal,
Mittel (506A) zum Identifizieren eines ersten Satzes von Komponententrägern, die für das Senden von Daten zu verwenden sind, basierend auf dem empfangenen Signal, wobei der erste Satz von Komponententrägern einen oder mehrere Komponententräger aufweist,
Mittel (508A) zum Identifizieren eines zweiten Satzes von Komponententrägern, die für das Senden von Steuersignalen zu verwenden sind, basierend auf dem empfangenen Signal, wobei der zweite Satz von Komponententrägern einen oder mehrere Komponententräger aufweist, und
Mittel (510A) zum Senden eines oder mehrerer Datensignale und eines oder mehrerer Steuersignale auf den identifizierten ersten und zweiten Sätzen von Komponententrägern basierend auf dem Multiplexmodus.

14. Eine Vorrichtung für drahtlose Kommunikationen, aufweisend:
Mittel (602A) zum Bestimmen eines Multiplexmodus und einer Anzahl von Ressourcenelementen, die für eine Daten- oder Steuersendung durch ein Benutzergerät (User Equipment bzw. UE) verwendet werden, wobei der Multiplexmodus das gleichzeitige Senden von Daten und Steuerkanälen oder das Multiplexen der Daten und Steuersignale in verschiedenen Zeitschlitzen vorsieht,
Mittel (604A) zum Senden eines Signals an das UE, das wenigstens den Multiplexmodus angibt, und
Mittel (606A) zum Empfangen eines oder mehrerer Steuersignale und eines oder mehrerer Datensignale von dem UE unter Verwendung des Multiplexmodus.

15. Ein Computerprogrammprodukt für drahtlose Kommunikationen, das ein computerlesbares Medium mit darauf gespeicherten Befehlen aufweist, die bei einer Ausführung durch einen oder mehrere Prozessoren dafür sorgen, dass die Schritte der Ansprüche 1 bis 12 durchgeführt werden.

## Revendications

1. Un procédé destiné à des communications sans fil, comprenant :
la réception (502) d'un signal, où le signal comprend une indication d'un mode de multiplexage, le mode de multiplexage étant une opération parmi la transmission simultanée de données et de canaux de commande ou le multiplexage de données et de signaux de commande dans des intervalles de temps différents,
la détermination (504) d'un mode de multiplexage en fonction du signal reçu,
l'identification (506) d'un premier ensemble de porteuses de composant à utiliser pour une transmission de données en fonction du signal reçu, où le premier ensemble de porteuses de composant comprend une ou plusieurs porteuses de composant,
l'identification (508) d'un deuxième ensemble de porteuses de composant à utiliser pour une transmission de signaux de commande en fonction du signal reçu, où le deuxième ensemble de porteuses de composant comprend une ou plusieurs porteuses de composant, et
la transmission (510) d'un ou de plusieurs signaux de données et d'un ou de plusieurs signaux de commande sur les premier et deuxième ensembles identifiés de porteuses de composant en fonction du mode de multiplexage.

2. Le procédé selon la Revendication 1, comprenant en outre :
l'identification d'un ou de plusieurs éléments de ressource utilisés pour une transmission des signaux de commande en fonction du signal reçu, et
la transmission des signaux de commande sur les éléments de ressource identifiés.

3. Le procédé selon la Revendication 1, où le signal comprend un message d'informations de commande en liaison descendante, DCI.

4. Le procédé selon la Revendication 1, où le signal est reçu d'une couche de commande de ressource radio, RRC.

5. Le procédé selon la Revendication 1, où le mode de multiplexage comprend une transmission simultanée des données et des canaux de commande.

6. Le procédé selon la Revendication 5, où les données et les canaux de commande ne sont pas étalés avec un étalement par une transformée de Fourier discrète, DFT, commune.

7. Le procédé selon la Revendication 1, où le deuxième ensemble de porteuses de composant est un sous-ensemble du premier ensemble de porteuses de composant.

8. Le procédé selon la Revendication 1, où le premier ensemble de porteuses de composant comprend une porteuse de composant unique.

9. Le procédé selon la Revendication 8, où les signaux de commande sont multiplexés en les signaux de données et transmis sur la porteuse de composant dans le premier ensemble de porteuses de composant.

10. Un procédé destiné à des communications sans fil, comprenant :
la détermination (602) d'un mode de multiplexage et d'un nombre d'éléments de ressource utilisés pour une transmission de données ou de commandes par un équipement d'utilisateur, UE, le mode de multiplexage étant une opération parmi la transmission simultanée de données et de canaux de commande ou le multiplexage des données et des signaux de commande dans des intervalles de temps différents,
la transmission (604) d'un signal à l'UE indiquant au moins le mode de multiplexage, et
la réception (606) d'un ou de plusieurs signaux de commande et d'un ou de plusieurs signaux de données provenant de l'UE au moyen du mode de multiplexage.

11. Le procédé selon la Revendication 10, où le signal comprend un message d'informations de commande en liaison descendante.

12. Le procédé selon la Revendication 10, où le mode de multiplexage comprend une transmission simultanée des données et des canaux de commande.

13. Un appareil destiné à des communications sans fil, comprenant :
un moyen (502A) de réception d'un signal comprenant une indication d'un mode de multiplexage, le mode de multiplexage étant une opération parmi la transmission simultanée de données et de canaux de commande ou le multiplexage de données et de canaux de commande dans des intervalles de temps différents,
un moyen (504A) de détermination d'un mode de multiplexage en fonction du signal reçu,
un moyen (506A) d'identification d'un premier ensemble de porteuses de composant à utiliser pour une transmission de données en fonction du signal reçu, où le premier ensemble de porteuses de composant comprend une ou plusieurs porteuses de composant,
un moyen (508A) d'identification d'un deuxième ensemble de porteuses de composant à utiliser pour une transmission de signaux de commande en fonction du signal reçu, où le deuxième ensemble de porteuses de composant comprend une ou plusieurs porteuses de composant, et
un moyen (510A) de transmission d'un ou de plusieurs signaux de données et d'un ou de plusieurs signaux de commande sur les premier et deuxième ensembles de porteuses de composant identifiés en fonction du mode de multiplexage.

14. Un appareil destiné à des communications sans fil, comprenant :
un moyen (602A) de détermination d'un mode de multiplexage et d'un nombre d'éléments de ressource utilisés pour une transmission de données ou de commandes par un équipement d'utilisateur, UE, le mode de multiplexage étant une opération parmi la transmission simultanée de données et de canaux de commande ou le multiplexage des données et des signaux de commande dans des intervalles de temps différents,
un moyen (604A) de transmission d'un signal à l'UE indiquant au moins le mode de multiplexage, et
un moyen (606A) de réception d'un ou de plusieurs signaux de commande et d'un ou de plusieurs signaux de données à partir de l'UE au moyen du mode de multiplexage.

15. Un produit de programme informatique destiné à des communications sans fil, comprenant un support lisible par ordinateur possédant des instructions conservées en mémoire sur celui-ci qui, lorsqu'elles sont exécutées par un ou plusieurs processeurs, résultent en l'exécution de la totalité des opérations selon l'une quelconque des Revendications 1 à 12.
